# EUROPÄISCHE PATENTSCHRIFT

(11) **EP 3 190 014 B1**
(45) Veröffentlichungstag und Bekanntmachung des Hinweises auf die Patenterteilung: **14.03.2018**
(21) Anmeldenummer: 16150533.4
(22) Anmeldetag: 08.01.2016
(51) Int. Cl.: B60T 7/20, B60T 13/04, B60T 13/58, B60T 15/02, B60T 15/36, B60T 17/04

(54) **BREMSANLAGE EINES TRAKTORS**
BRAKE SYSTEM FOR A TRACTOR
INSTALLATION DE FREINAGE POUR UN TRACTEUR

(43) Veröffentlichungstag der Anmeldung: 12.07.2017
(73) Patentinhaber: Haldex Brake Products Aktiebolag, 261 24 Landskrona (SE)
(72) Erfinder: Maltry, Helmut, 69226 Nussloch (DE)
(74) Vertreter: REHBERG HÜPPE + PARTNER

(56) Entgegenhaltungen:
- EP-A2- 2 631 131
- EP-B1- 2 165 901
- DE-A1-102009 032 313

## Beschreibung

### TECHNISCHES GEBIET DER ERFINDUNG

Die Erfindung betrifft eine Bremsanlage eines Zugfahrzeugs, insbesondere eines Traktors, gemäß dem Oberbegriff des Anspruchs 1. Das Zugfahrzeug verfügt hierbei über eine hydraulische Bremsanlage. Mittels eines Anhängersteuerventils erfolgt die Umwandlung eines hydraulischen Bremsdrucks in einen pneumatischen Bremssteuerdruck für einen Anhänger.

Des Weiteren betrifft die Erfindung eine Gruppe von Bremsanlagen, die über eine erste Teilgruppe mit Bremsanlagen verfügt, die für einen ersten Typ von Zugfahrzeugen oder Traktoren bestimmt sind, bei welchen die hydraulische Bremsanlage einen ersten hydraulischen Bremsdruck besitzt, sowie eine zweite Teilgruppe mit Bremsanlagen, die für eine zweiten Typ von Zugfahrzeugen oder Traktoren bestimmt sind, bei welchen die hydraulische Bremsanlage des Zugfahrzeugs einen zweiten hydraulischen Betriebsdruck aufweist, der von dem ersten hydraulischen Betriebsdruck abweicht.

### STAND DER TECHNIK

Anhänger mit pneumatischer Bremsanlage sind üblicherweise über einen Kupplungskopf Vorrat sowie einen Kupplungskopf Bremse pneumatisch mit einem Zugfahrzeug gekoppelt. Der Kupplungskopf Vorrat dient hierbei der Bereitstellung eines Vorrats- oder Versorgungsdrucks für den Anhänger, während der Kupplungskopf Bremse der Übertragung eines pneumatischen Bremsdrucks entsprechend dem vorzugsweise vom Fahrer vorgegebenen Bremswunsch über eine Bremssteuerleitung dient mit dem Ziel, die Abbremsung des Anhängers an die Abbremsung des Zugfahrzeugs anzupassen. Bei einem Abriss der über den Kupplungskopf Bremse gekoppelten Bremssteuerleitung oder einer anderweitigen Leckage ist die pneumatische Übertragung des pneumatischen Bremsdrucks und damit des Bremswunsches von dem Zugfahrzeug zu dem Anhänger nicht mehr möglich, womit auch eine Abbremsung des Anhängers ohne Weiteres nicht mehr möglich ist. Kommt es gleichzeitig zu einem Abriss auch der mechanischen Kupplung zwischen Anhänger und Zugfahrzeug, würde sich der Anhänger (ohne Einsatz eines im folgenden beschriebenen Anhängerbremsventils mit Notbremsfunktion) frei und ungebremst bewegen, womit dieser beträchtlichen Schaden anrichten kann. Um dies zu vermeiden, werden pneumatische Bremsanlagen eines Anhängers mit einem Anhängerbremsventil ausgestattet, welches über eine Notbremsfunktion verfügt. Die Notbremsfunktion führt bei Einbruch des Drucks in der Vorratsleitung insbesondere infolge einer Leckage derselben automatisch eine Notbremsung herbei. Auch wenn die Vorratsleitung intakt ist, führt der Abriss der Bremssteuerleitung oder eine anderweitige Leckage im Bereich derselben dazu, dass Druckluft eines dem Anhängerbremskreis zugeordneten Vorratsbehälters des Zugfahrzeugs über die abgerissene Bremssteuerleitung oder die Leckage in derselben entweicht, womit es dann auch zu einem Druckabfall in der Vorratsleitung kommt, welcher dann die Notbremsfunktion auslösen kann. Hierbei hängt der Zeitpunkt des Auslösens der Notbremsfunktion des Anhängers grundsätzlich von der Schnelligkeit der Entlüftung des Vorratsbehälters ab.

Für Zugfahrzeuge mit pneumatischer Bremsanlage, insbesondere Lastkraftwagen, finden sogenannte Abrissventile Einsatz, die grundsätzlich ungedrosselt den Vorratsbehälter des Zugfahrzeugs mit dem Kupplungskopf Vorrat verbinden. Bei einem Abriss der Bremssteuerleitung oder einer Leckage in dieser schaltet das Abrissventil um in eine zweite Betriebsstellung, in welcher der Vorratsbehälter z. B. über eine Drossel mit dem Kupplungskopf Vorrat verbunden ist. Kommt es dann zu einer Entlüftung des Vorratsbehälters infolge des Abrisses oder der Leckage der Bremssteuerleitung, hat dies eine weitere gedrosselte Belüftung der Vorratsleitung über die Drossel des Abrissventils zur Folge, sodass konstruktiv durch die Wahl des Drosselquerschnitts vorbestimmt werden kann, wie schnell bei einem Defekt in der Bremssteuerleitung die Entlüftung erfolgt und damit das Auslösen der Notbremsfunktion erfolgt.

Aus einer Einbauanleitung des Unternehmens Graubremse GmbH aus dem Jahr 1977 mit der Bezeichnung "*G 813*: *2*/*2-Wegeventil pneum. betätigt mit Drosselstellung NW 7*/*NW 2*" ist ein Abrissventil in Schieberbauart bekannt, bei welchem ein Vorratsanschluss, der mit einem Vorratsbehälter des Zugfahrzeugs verbindbar ist, und ein Ausgangsanschluss für einen Kupplungskopf Vorrat je nach Betriebsstellung eines Ventilkörpers ungedrosselt oder gedrosselt miteinander verbunden sind. Hierbei wird der Ventilkörper über eine Feder in eine erste Betriebsstellung beaufschlagt. In der ersten Betriebsstellung ist der Vorratsanschluss ungedrosselt mit dem Ausgangsanschluss für den Kupplungskopf Vorrat verbunden ist. Die erste Betriebsstellung wird dabei unabhängig davon eingenommen, ob eine Betriebsbremsung erfolgt oder nicht. Die beiden Stirnflächen des Ventilkörpers bilden jeweils entgegengesetzt zueinander wirkende Steuerflächen aus. Auf eine erste Steuerfläche, deren Wirkrichtung mit einer Erhöhung der Beaufschlagung der Feder korreliert, wirkt der pneumatische Bremsdruck eines pneumatischen Betriebsbremskreises des Zugfahrzeugs, während auf die andere zweite Steuerfläche der von dem Anhängersteuerventil ausgesteuerte und für die Bremssteuerleitung mit dem Kupplungskopf Bremse bestimmte pneumatische Bremsdruck wirkt. Ohne Abriss der Bremssteuerleitung heben sich die auf die Steuerflächen wirkenden Kräfte (teilweise oder vollständig) auf, sodass die Feder den Ventilkörper in der ungedrosselten ersten Betriebsstellung hält, was unabhängig davon ist, ob eine Betätigung der Betriebsbremse erfolgt oder nicht. Bricht hingegen der pneumatische Bremsdruck in der Bremssteuerleitung infolge eines Abrisses ein, wird die zweite Steuerfläche entlüftet. Der auf die erste Steuerfläche wirkende pneumatische Bremsdruck des Zugfahrzeugs überführt bei einer Betätigung der Betriebsbremse dann den Ventilkörper entgegen der Wirkung der Feder in die zweite Betriebsstellung, in welcher eine Drossel wirksam ist. Damit erfolgt lediglich eine gedrosselte Nachfüllung der Druckluftanlage des Anhängers, welche einer gleichzeitigen Entlüftung durch die defekte Bremssteuerleitung entgegenwirkt, so dass es zu einem Druckabfall kommt, dessen Schnelligkeit von der Drosselcharakteristik der Drossel abhängt.

Aus der nicht vorveröffentlichten europäischen Patentanmeldung EP 15 177 950.1 ist eine Bremsanlage 1 gemäß Fig. 1 für ein Zugfahrzeug 2, insbesondere einen Schlepper oder Traktor bekannt.

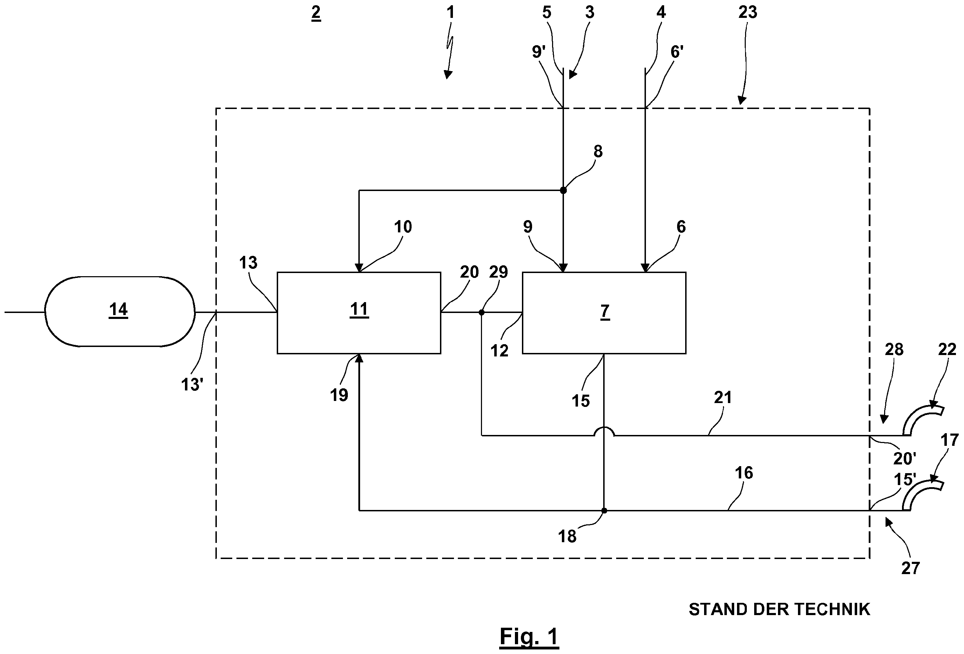

Das Zugfahrzeug 2 weist eine hier zweikreisige hydraulische Bremsanlage 3 auf, von der in Fig. 1 lediglich die beiden hydraulischen Bremsleitungen 4, 5, die den beiden Kreisen zugeordnet sind, dargestellt sind. Die hydraulische Bremsleitung 4 ist mit einem hydraulischen Steueranschluss 6 eines Anhängersteuerventils 7 verbunden. Über eine Verzweigung 8 ist die hydraulische Bremsleitung 5 sowohl mit einem hydraulischen Steueranschluss 9 des Anhängersteuerventils 7 als auch einem hydraulischen Steueranschluss 10 eines Abrissventils 11 verbunden. Das Abrissventil 11 verfügt über einen Vorratsanschluss 13, der aus einem Vorratsbehälter 14 mit Druckluft versorgt wird. Das Anhängersteuerventil 7 verfügt über einen Ausgangsanschluss 15, an welchem über eine Bremssteuerleitung 16 ein Kupplungskopf Bremse 17 angeschlossen ist. Über eine Verzweigung 18 ist an den Ausgangsanschluss 15 des Anhängersteuerventils 7 auch ein pneumatischer Steueranschluss 19 des Abrissventils 11 angeschlossen. Das Abrissventil 11 verfügt über einen Ausgangsanschluss 20, der über eine Vorratsleitung 21 mit dem Kupplungskopf Vorrat 22 verbunden ist. Des Weiteren ist der Ausgangsanschluss 20 des Abrissventils 11 über eine Verzweigung 29 mit einem Anschluss 12 des Anhängersteuerventils 7 verbunden. Eine Versorgung des Anhängersteuerventils 7 aus dem Vorratsbehälter 14 erfolgt somit über das Abrissventil 11 parallel zu der Versorgung des Kupplungskopf Vorrats 22.

Möglich ist, dass das Anhängersteuerventil 7 und Abrissventil 11 als singuläre Bauelemente mit einzelnen Gehäusen bei beabstandeter Anordnung derselben ausgebildet sind. Für das in Fig. 1 dargestellte Ausführungsbeispiel sind das Anhängersteuerventil 7 und das Abrissventil 11 in eine Zugfahrzeug-Ventileinheit 23 integriert. Hierbei kann die Zugfahrzeug-Ventileinheit 23 modular ausgebildet sein, wobei das Anhängersteuerventil 7 und das Abrissventil 11 jeweils ein Modul bilden, die beispielsweise aneinander angeflanscht werden. Möglich ist aber auch, dass das Anhängersteuerventil 7 und das Abrissventil 11 in einem gemeinsamen Gehäuse aufgenommen sind. Die Zugfahrzeug-Ventileinheit 23 bildet in diesem Fall den hydraulischen Steueranschluss 6', den hydraulischen Steueranschluss 9', den Ausgangsanschluss 15', den Ausgangsanschluss 20', sowie den Vorratsanschluss 13' aus, über welche die Zugfahrzeug-Ventileinheit 23 (hier ausschließlich) mit benachbarten hydraulischen und pneumatischen Komponenten kommuniziert. Möglich ist aber auch, dass in die Zugfahrzeug-Ventileinheit 23 elektronische Steuerelemente wie eine elektronische Steuereinheit und/oder elektromagnetische Ventileinheiten integriert sind, wobei in diesem Fall die Zugfahrzeug-Ventileinheit 23 einen elektronischen Steueranschluss oder einen Anschluss für ein Bussystem wie CAN besitzen kann. Durchaus möglich ist des Weiteren, dass über innere Kanäle oder Leitungen ein mit einem Strich gekennzeichneter Anschluss 6', 9', 13', 15', 20' mit einem ohne Strich gekennzeichneten Anschluss 6, 9, 10, 13, 15, 20 des integrierten Anhängersteuerventils 7 und/oder Abrissventils 11 verbunden ist.

Die Funktionsweise der Bremsanlage 1 ist wie folgt: Zur Erzeugung einer Bremswirkung wird mindestens ein hydraulischer Bremsdruck in den hydraulischen Bremsleitungen 4, 5 erzeugt, mittels dessen hydraulische Brems-Aktuatoren des Zugfahrzeugs 2 betätigt werden. Möglich ist hierbei, dass der hydraulische Bremsdruck in den hydraulischen Bremsleitungen 4, 5 vorgegeben wird von dem Fahrer, beispielsweise über mindestens ein Bremspedal. Alternativ oder kumulativ möglich ist, dass eine automatische Erzeugung eines hydraulischen Bremsdrucks, insbesondere mit einer elektronischen Steuereinheit, erfolgt.

Aus den dem Anhängersteuerventil 7 über die hydraulischen Steueranschlüsse 6, 9 zugeführten Bremsdrücken erzeugt das Anhängersteuerventil 7 einen an dem Ausgangsanschluss 15 ausgesteuerten pneumatischen Bremssteuerdruck, welcher über die Bremssteuerleitung 16 dem Kupplungskopf Bremse 17 zugeführt wird. An den Kupplungskopf Bremse 17 ist ein entsprechender Gegen-Kupplungskopf des Anhängers angeschlossen, womit dann der pneumatischen Bremsanlage des Anhängers, welche Bestandteil der Bremsanlage 1 ist, der Bremssteuerdruck zugeführt wird. Das Anhängersteuerventil 7 erzeugt hierbei vorzugsweise einen Bremssteuerdruck derart, dass die an dem Anhänger herbeigeführte Bremswirkung der Bremswirkung des Zugfahrzeugs 2 entspricht. Zur Herbeiführung einer Streckbremsfunktion, die automatisch oder durch den Fahrer ausgelöst werden kann, kann das Anhängersteuerventil 7 auch temporär eine größere Bremswirkung an dem Anhänger herbeiführen als an dem Zugfahrzeug 2. Ebenfalls möglich ist, dass, u. U. verursacht durch den Fahrer oder eine elektronische Steuereinheit, eine Prüffunktion bei stehendem Fahrzeug ausgeführt wird, bei welcher das Zugfahrzeug 2 gebremst wird, während der Anhänger nicht gebremst wird.

Auf an sich bekannte Weise kann die Abhängigkeit des Bremssteuerdrucks an dem Ausgangsanschluss 15 von den hydraulischen Bremsdrücken an den Steueranschlüssen 6, 9 und weiteren Betriebsbedingungen angepasst werden, wenn ein weiterer pneumatischer Steueranschluss, insbesondere zur Herbeiführung einer sogenannten Voreilung, vorhanden ist. Ebenfalls möglich ist, dass eine Modifikation eines pneumatischen Steuerdrucks des Anhängersteuerventils 7 über ein elektronisch gesteuertes Steuerventil erfolgt und/oder das Anhängersteuerventil 7 einen von einer elektronischen Steuereinrichtung angesteuerten elektrischen Steueranschluss besitzt, vgl. insbesondere EP 2 165 901 B1 und EP 2 305 524 B1.

Die Bremssteuerleitung 16 ist mit einem Bremsleitungsteil 27, dem Kupplungskopf Bremse 17, dem Gegenkupplungskopf Bremse (nicht dargestellt) und dem anhängerseitigen Teil der Bremssteuerleitung (nicht dargestellt) gebildet. Die Vorratsleitung 16 ist mit einem Vorratsleitungsteil 28, dem Kupplungskopf Vorrat 22, dem Gegenkupplungskopf Vorrat (nicht dargestellt) und dem anhängerseitigen Teil der Vorratsleitung (nicht dargestellt) gebildet.

Kommt es zu einem Defekt in der Bremssteuerleitung 16, worunter bspw. ein Abriss des Kupplungskopfs 17 in dem anhängerseitigen Teil der Bremssteuerleitung verstanden wird, kommt es im Fall einer Bremsbetätigung mit einer Öffnung des Anhängersteuerventils 7 zu einer Entlüftung der Vorratsleitung 21 durch das Anhängersteuerventil 7 hindurch über den Defekt in der Bremssteuerleitung 16, womit grundsätzlich ein schneller Abfall des Drucks in der Vorratsleitung 21 möglich wäre mit einer entsprechend schnellen Aktivierung der Notbremsfunktion des Anhängerbremsventils. Allerdings ist die Vorratsleitung 21 auch über das Abrissventil 11 mit dem Vorratsbehälter 14 verbunden, womit eine Nachspeisung von Druckluft aus dem Vorratsbehälter 14 in die Vorratsleitung 21 erfolgt. Die Schnelligkeit des Abfalls des Drucks in der Vorratsleitung 21 ergibt sich somit aus der Differenz der über den Defekt in der Bremssteuerleitung 16 entweichenden Druckluft und der aus dem Vorratsbehälter 14 nachgeführten Druckluft. Ist in dem Defektfall eine zweite Betriebsstellung des Abrissventils 11 wirksam, in welcher die Nachspeisung der Druckluft aus dem Vorratsbehälter 14 in die Vorratsleitung 21 unter Zwischenordnung einer Drossel erfolgt, führt diese gedrosselte Nachspeisung zu einem schnelleren Abfall des Drucks in der Vorratsleitung 21, womit ein früheres Ansprechen der Notbremsfunktion des Anhängerbremsventils des Anhängers herbeigeführt werden kann. Letztendlich kann somit über die Vorgabe der Drosselwirkung in der zweiten Betriebsstellung des Abrissventils 11 der Abfall des Drucks in der Vorratsleitung 21 und die Schnelligkeit des Ansprechens der Notbremsfunktion des Anhängers konstruktiv vorgegeben werden.

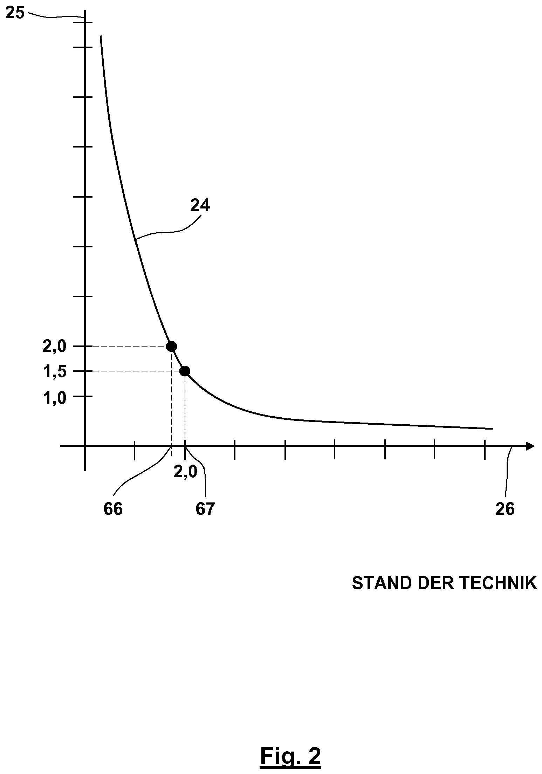

**Fig. 2** zeigt einen Verlauf 24 des Drucks 25 in der Vorratsleitung 21 über der Zeit 26 bei einem Defekt in der Bremssteuerleitung 16. Hierbei sind die Steigung und die Kurvenform des Verlaufs 24 abhängig von der Drosselwirkung des Abrissventils 11 in der zweiten Betriebsstellung.

In der Norm "*Delegierte Verordnung*" der Europäischen Kommission 2015/68 vom 15.10.2014, veröffentlicht am 23.01.2015 im Amtsblatt der Europäischen Union, ist für den Verlauf 24 vorgeschrieben, dass der Druck in der Vorratsleitung 21 innerhalb von zwei Sekunden auf einen Wert von 150 kPa (1,5 bar) abfallen muss. Des Weiteren muss das Auslösen der Notbremsfunktion des Anhängers einsetzen, bevor der Druck in der Vorratsleitung auf 200 kPa (2,0 bar) abgefallen ist, sofern der Druck in der Vorratsleitung um mindestens 100 kPa (1,0 bar) pro Sekunde sinkt. Die Auslegung der Drosselwirkung in der zweiten Betriebsstellung erfolgt derart, dass der Abfall des Drucks in der Vorratsleitung mit der vorgeschriebenen Geschwindigkeit erfolgen kann. Andererseits gewährleistet das Abrissventil 11, dass die Notbremsfunktion des Anhängerbremsventils ausgelöst wird, bevor der Druck in der Vorratsleitung 21 auf 2 bar abgefallen ist.

Zu erkennen ist in Fig. 2, dass mit dem Unterschreiten eines Drucks von 2,0 bar zu einem Zeitpunkt 66 < 2 Sek. eine Auslösung der Notbremsfunktion mit der Initiierung der automatischen Bremsung des Anhängers erfolgt. Zu dem Zeitpunkt 67, welcher spätestens nach 2 Sek. erreicht sein muss, ist der Druck von 1,5 bar erreicht.

Die nicht vorveröffentlichte europäische Patentanmeldung EP 15 177 950.1 offenbart dann unterschiedliche konstruktive Ausführungsformen eines Abrissventils 11, dessen Betriebsstellung gegen die Beaufschlagung durch eine Feder über einen Adapterkolben veränderbar ist, wobei der Adapterkolben mit dem hydraulischen Bremsdruck beaufschlagt ist. Um eine Anpassung des Abrissventils 11 an unterschiedliche hydraulische Bremsdrücke in Zugfahrzeugen unterschiedlicher Typen vorzunehmen, finden unterschiedliche Adapterkolben mit unterschiedlichen Adapterkolbenflächen Einsatz, auf welche die unterschiedlichen hydraulischen Bremsdrücke einwirken.

EP 2 631 131 A2 offenbart ein landwirtschaftliches Zugfahrzeug, welches eine hydraulische Bremsanlage sowie eine pneumatische Bremsanlage für einen mit dem Zugfahrzeug koppelbaren Anhänger aufweist. In Abhängigkeit des hydraulischen Drucks in der hydraulischen Bremsanlage steuert ein Anhängersteuerventil einen Bremssteuerdruck für den Anhänger an einem Kupplungskopf Bremse. Eine Versorgungsleitung versorgt über ein Magnetventil und eine dem Magnetventil nachgeordnete Verzweigung einerseits einen Versorgungsanschluss des Anhängersteuerventils und andererseits einen Kupplungskopf Vorrat. Das Magnetventil befindet sich stromlos in einer Durchlassstellung, während dieses mit elektrischer Beaufschlagung durch die Steuereinheit eine Drosselstellung einnehmen kann. Ein Abriss des Kupplungskopfs Vorrat oder eine Leckage in einer zugeordneten Vorratsleitung wird erkannt durch einen Druckabfall in der zu dem Kupplungskopf Vorrat führenden Leitung, der über einen Sensor erfasst wird. Erkennt die Steuereinheit auf Grundlage des Messsignals des Sensors einen derartigen Druckabfall, wird das Magnetventil von der Steuereinheit in die Drosselstellung überführt.

### AUFGABE DER ERFINDUNG

Der vorliegenden Erfindung liegt die Aufgabe zugrunde, eine Bremsanlage für ein Zugfahrzeug, insbesondere einen Traktor, vorzuschlagen, welche hinsichtlich
- der Einbaumöglichkeiten für unterschiedliche Typen von Zugfahrzeugen oder Traktoren,
- unterschiedlichen hydraulischen Bremsdrücken,
- der zuverlässigen Erkennung einer Abrisssituation und/oder
- des Betriebs mit unterschiedlichen hydraulischen Medien, bspw. Bremsflüssigkeiten oder Mineralöl
verbessert ist. Des Weiteren liegt der Erfindung die Aufgabe zugrunde, eine Gruppe von Bremsanlagen vorzuschlagen, die hinsichtlich des Einsatzes für Zugfahrzeuge unterschiedlicher Typen verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die erfindungsgemäße Bremsanlage verfügt über ein Anhängersteuerventil, welches in an sich bekannter Weise einen pneumatischen Bremssteuerdruck für einen Anhänger erzeugt, welcher von einem hydraulischen Bremsdruck der hydraulischen Bremsanlage des Zugfahrzeugs abhängig ist. Durchaus möglich ist, dass in das Anhängersteuerventil Zusatzfunktionen integriert sind, wie bspw. eine Erzeuge einer Voreilung, eine Beeinflussung des Bremssteuerdrucks bspw. durch eine elektropneumatische Steuerung u. ä. (vgl. bspw. die Druckschriften EP 2 165 901 B1 und EP 2 305 524 B1).

Des Weiteren verfügt die erfindungsgemäße Bremsanlage über ein Abrissventil, welches zwischen einem Kupplungskopf Vorrat und einer Druckquelle, insbesondere einem Vorratsbehälter des Zugfahrzeugs, angeordnet ist. Das Abrissventil weist eine erste Betriebsstellung und eine zweite Betriebsstellung auf. Ein Drosselquerschnitt des Abrissventils ist in der zweiten Betriebsstellung kleiner als in der ersten Betriebsstellung (wobei in der ersten Betriebsstellung auch keine Drosselung erfolgen kann). Wie dieses grundsätzlich für den eingangs genannten Stand der Technik der Fall ist, kann in einer Abrisssituation durch Herbeiführung der zweiten Betriebsstellung mit dem wirksamen kleinen Drosselquerschnitt eine Nachförderung von Druckluft zu dem Kupplungskopf Vorrat so weit gedrosselt werden, dass diese Nachförderung geringer ist als die über das Anhängersteuerventil und die defekte Bremssteuerleitung oder den abgerissenen Kupplungskopf Bremse entweichende Druckluft. Dies hat letzten Endes zur Folge, dass die pneumatische Anhängerbremsanlage entlüftet wird, womit eine Notbremsfunktion der Anhängerbremsanlage ausgelöst wird mit automatischer Betätigung der Bremsen. Hierbei hängt die Schnelligkeit der Auslösung der Notbremsfunktion ab von dem Drosselquerschnitt des Abrissventils in der zweiten Betriebsstellung.

Die Erfindung schlägt vor, dass abweichend zum eingangs genannten Stand der Technik das Abrissventil nicht durch Beaufschlagung mit dem hydraulischen Bremsdruck in die zweite Betriebsstellung gesteuert wird. Vielmehr wird erfindungsgemäß vorgeschlagen, dass eine Steuereinheit vorhanden ist. Die Steuereinheit ist mit Steuerlogik ausgestattet. Die Steuerlogik erzeugt ein elektrisches Steuersignal. Das elektrische Steuersignal steuert dann das Abrissventil in einer Abrisssituation in die zweite Betriebsstellung. Anders gesagt erfolgt eine elektronische Steuerung des Abrissventils in die zweite Betriebsstellung. Eine derartige elektronische Steuerung (worunter auch eine Regelung subsummiert wird) führt auf eine Vielzahl optionaler und alternativer oder kumulativer Vorteile und Ausgestaltungsmöglichkeiten:
- Möglich ist, dass durch die elektronische Steuerung eine individuelle Anpassung des Abrissventils an unterschiedliche Typen von Bremsanlagen und Zugfahrzeugen entbehrlich ist. Um lediglich ein nicht beschränkendes Beispiel zu nennen, kann ein erster Typ eines Zugfahrzeugs mit einem hydraulischen Betriebsdruck von 20 bar betrieben werden, während ein anderes Zugfahrzeugs mit einem hydraulischen Betriebsdruck von 100 bar betrieben wird. Soll dann eine Umschaltung des Abrissventils in die zweite Betriebsstellung mit einer hydraulischen Betätigung in Höhe von bspw. zumindest 50 % des Betriebsdrucks erfolgen, würde dies für den Stand der Technik erfordern, dass eine Kolbenfläche, auf welche der hydraulische Bremsdruck wirkt und welche die Umschaltkraft erzeugt, für das Abrissventil in dem ersten Zugfahrzeug fünf Mal so groß gewählt werden müsste wie bei einem Abrissventil des zweiten Zugfahrzeugs. Diese gebotene individuelle Anpassung der Kolbenfläche des Abrissventils erhöht den Bauaufwand, Montageaufwand, Bevorratungsaufwand, Herstellungsaufwand und die Bauteilvielfalt. Durch die erfindungsgemäße elektronische Steuerung kann ein- und dasselbe Abrissventil unabhängig von dem vorliegenden Typ des Zugfahrzeugs verwendet werden, womit dann aber die Steuerlogik für die unterschiedlichen Typen des Zugfahrzeugs das elektronische Steuersignal zur Umsteuerung des Abrissventils in die zweite Betriebsstellung mit dem Vorliegen von unterschiedlichen Drücken erzeugen kann (für das erläuterte Ausführungsbeispiel im ersten Fall bei einem hydraulischen Bremsdruck, der größer ist als 10 bar, während für den zweiten Typ des Zugfahrzeugs das Steuersignal zur Umschaltung des Abrissventils mit einem hydraulischen Bremsdruck von mehr als 50 bar erzeugt wird).
- Während für die hydraulische Steuerung der Betriebsstellung des Abrissventils als Steuerkriterium für das Herbeiführen der zweiten Betriebsstellung ausschließlich der hydraulische Bremsdruck herangezogen werden kann, ermöglicht die elektronische Steuerung die Berücksichtigung auch alternativer oder kumulativer weiterer Umschaltkriterien, womit auch erweiterte Möglichkeiten für das Erkennen einer Abrisssituation bestehen. Um lediglich einige nicht beschränkende Beispiele zu nennen, kann bspw. bei einer zweikreisigen hydraulischen Bremsanlage des Zugfahrzeugs von der Steuerlogik der Steuereinheit nicht lediglich ein hydraulischer Bremsdruck berücksichtigt werden. Vielmehr kann aus der einzelnen Bewertung beider hydraulischer Bremsdrücke oder auch unter der Berücksichtigung eines von beiden Bremsdrücken abhängigen Kennwerts oder Kennfelds oder einer Wichtung der Bremsdrücke der beiden Kreise ein Abrisskriterium zur Erkennung einer Abrisssituation ausgewertet werden.
   Möglich ist auch, dass ein unter Umständen im Betrieb kurzfristiger Einbruch eines Bremssteuerdrucks und/oder ein temporärer kurzfristiger Anstieg des hydraulischen Bremsdrucks, welchen unter Umständen ein herkömmliches Abrissventil als Abrisssituation werten würde mit der Umschaltung in die zweite Betriebsstellung, mit der elektronischen Steuerung nicht als Abrisssituation behandelt wird. Mittels der Steuerlogik der Steuereinheit können im Rahmen der Erfindung beliebige weitere Betriebsparameter und Kriterien ausgewertet werden, um zuverlässig eine Abrisssituation zu erkennen.

Im Rahmen der Erfindung kann die Steuereinheit ausschließlich der Ansteuerung des Abrissventils dienen. Möglich ist, dass die Steuereinheit mit weiteren Steuereinheiten vernetzt ist, insbesondere durch ein Bussystem und/oder elektrische Leitungen. Möglich ist auch, dass die Steuereinheit multifunktional ist, indem diese zusätzlich zu der Ansteuerung des Abrissventils der Ansteuerung weiterer Komponenten der Bremsanlage, insbesondere des Anhängersteuerventils zwecks Ermöglichung der weiteren Funktionen gemäß den Druckschriften EP 2 165 901 B1 und EP 2 305 524 B1, dient. Möglich ist auch, dass die Steuereinheit als ABS- oder EBS-Steuereinheit ausgebildet ist.

Die Erfindung widmet sich der Erkennung einer Abrisssituation. Die Erfindung schlägt vor, dass ein Sensor in der Bremsanlage vorhanden ist, der (unmittelbar oder mittelbar) den Druck in einer hydraulischen Bremsleitung erfasst. Hierbei kann der Druck in der hydraulischen Bremsleitung selbst oder in einer Zweigleitung der hydraulischen Bremsleitung durch den Sensor erfasst werden. Eine mittelbare Erfassung des Drucks in der hydraulischen Bremsleitung kann erfolgen bspw. durch einen Bremspedalsensor, wobei in diesem Fall je nach Charakteristik des hydraulischen Geber-Zylinders, der von dem Bremspedal betätigt wird, die Stellung des Bremspedals mit einem Druck in der hydraulischen Bremsleitung korreliert. Zusätzlich ist in der erfindungsgemäßen Bremsanlage ein Sensor vorhanden, welcher (unmittelbar oder mittelbar) den Druck in einer pneumatische Bremssteuerleitung, welche mit dem Kupplungskopf Bremse verbunden ist, erfasst. Hierbei kann der Sensor bspw. den Druck in der pneumatischen Steuerleitung selbst oder einer Zweigleitung oder am Kupplungskopf Bremse erfassen. Möglich ist auch, dass der Sensor die Betriebsstellung des Anhängersteuerventils, insbesondere eines Wiegekolbens desselben, erfasst, welche mit dem Druck in der pneumatische Bremssteuerleitung korreliert. Aus dem Ausgangssignal der vorgenannten Sensoren kann dann auf eine Abrisssituation geschlossen werden .

Erfindungsgemäß ist die Steuereinheit mit Steuerlogik ausgestattet, die auf Grundlage eines Vergleichs des Signals des Sensors, welcher den Druck in der hydraulischen Bremsleitung erfasst, mit dem Signal des Sensors, der den Druck in der pneumatischen Bremssteuerleitung erfasst, eine Abrisssituation erkennt. Alternativ möglich ist, dass die Steuerlogik ein Verhältnis der Signale der Sensoren zur Erkennung der Abrisssituation auswertet.

Dies soll anhand des folgenden, vereinfachenden, nicht beschränkenden Beispiels erläutert werden: Erzeugt das Anhängersteuerventil einen Bremssteuerdruck, der proportional ist zu dem anliegenden hydraulischen Bremsdruck, führt eine intakte Bremsanlage zu einem konstanten Verhältnis des Signals des Sensors, der den Druck in der hydraulischen Bremsleitung erfasst, zu dem Signal des Sensors, der den Druck in der pneumatischen Bremssteuerleitung erfasst. Hingegen fällt bei unverändertem hydraulischen Bremsdruck in einer Abrisssituation der Druck in der pneumatischen Bremssteuerleitung ab, womit sich das genannte Verhältnis verändert, was durch die Steuerlogik der Steuereinheit erkannt werden kann und womit dann das Steuersignal zur Umsteuerung des Abrissventils in die zweite Betriebsstellung erzeugt werden kann. Möglich ist auch, dass ein absoluter Druckabfall des Bremssteuerdrucks durch Auswertung des Signals des Sensors im Fall einer Abrisssituation erfasst wird.

Alternativ oder kumulativ möglich ist, dass die Steuerlogik für das Erkennen einer Abrisssituation einen Änderungsverlauf des Signals des Sensors, welcher den Druck in der pneumatischen Bremssteuerleitung erfasst, auswertet. So kann beispielsweise die Änderungsgeschwindigkeit des Signals des Sensors abhängen von der Größe einer Leckage in der Bremssteuerleitung oder des Kupplungskopfs. Andererseits kann durch die Auswertung der Zeitkonstante der Änderung des Signals des Sensors unterschieden werden, ob eine von dem Anhängersteuerventil ausgesteuerte Änderung des pneumatischen Bremssteuerdrucks vorliegt oder eine Änderung, welche eher auf eine Leckage und damit eine Abrisssituation hindeutet. Möglich ist beispielsweise auch, dass die Änderungsgeschwindigkeit oder eine Steigung des Signals des Sensors ausgewertet wird. Ist z. B. die Steigung des Signals des Sensors, der den hydraulischen Bremsdruck erfasst, Null (womit sich also der hydraulische Bremsdruck nicht ändert), während sich der pneumatische Bremssteuerdruck ändert, insbesondere verringert, deutet dies auf eine Leckage und damit eine Abrisssituation hin.

Alternativ oder kumulativ möglich ist auch, dass für das Erkennen einer Abrisssituation durch die Steuerlogik eine Zeitdauer ausgewertet wird, welche das Verhältnis der Signale der Sensoren für den hydraulischen Bremsdruck und den pneumatischen Bremssteuerdruck einen Schwellwert unter- oder überschreitet. Auf diese Weise kann bspw. vermieden werden, dass für einen kurzzeitigen, betriebsbedingten Anstieg oder Abfall zumindest eines der Signale fälschlicherweise auf eine Abrisssituation geschlossen wird.

Für die Art der Herbeiführung der zweiten Betriebsstellung in Abhängigkeit des von der Steuereinheit erzeugten Steuersignals gibt es mehrere Möglichkeiten:
Für einen erfindungsgemäßen Vorschlag wird das Steuersignal über eine Steuerleitung einem elektropneumatischen Vorsteuerventil zugeführt. Das Vorsteuerventil erzeugt einen Vorsteuerdruck für das Abrissventil, der dann das Abrissventil in einer Abrisssituation in die zweite Betriebsstellung steuert. Der Einsatz des Vorsteuerventils ist unter Umständen vorteilhaft, da mit verhältnismäßig kleinen elektrischen Steuersignalen und einem kleinen elektromagnetischen Aktuator der Vorsteuerdruck erzielt werden kann. Andererseits nutzt die elektropneumatische Vorsteuerung die ohnehin in dem Zugfahrzeug vorhandene Druckluft als Energiequelle für die Herbeiführung der zweiten Betriebsstellung des Abrissventils.

Für einen andere Vorschlag der Erfindung wird das Steuersignal über eine Steuerleitung einem elektromagnetischen Aktuator zugeführt, der in einer Abrisssituation einen Ventilkörper des Abrissventils bewegt. Hierbei kann der Ventilkörper unmittelbar mit einem Anker des elektromagnetischen Aktuators verbunden sein oder mittelbar mit diesem in Antriebsverbindung stehen. Mit der Bewegung des Ventilkörpers wird das Abrissventil dann in die zweite Betriebsstellung gesteuert. Für diese Ausgestaltung können zusätzliche Leitungsverbindungen und ein Vorsteuerventil, die für eine elektropneumatische Vorsteuerung erforderlich sind, eingespart werden.

Möglich ist auch, dass die Steuereinheit mit Steuerlogik ausgestattet ist, die für das Erkennen einer Abrisssituation das Ergebnis des Vergleichs oder des Verhältnisses der Signale, mittels welchen der Druck in der hydraulischen Bremsleitung und in der pneumatischen Bremssteuerleitung erfasst wird, mit einem Schwellwert vergleicht.

Durchaus möglich ist, dass die genannten Bauelemente der Bremsanlage jeweils separat ausgebildet sind und diese über elektrische und/oder pneumatische und/oder hydraulische Leitungen miteinander verbunden sind. Für einen weiteren Vorschlag der Erfindung sind das Anhängersteuerventil, das Abrissventil, mindestens ein Sensor und/oder die Steuereinheit in eine Zugfahrzeug-Ventileinheit integriert, wobei diese Integration in ein gemeinsames Gehäuse erfolgen kann oder auch die Integration in eine Zugfahrzeug-Ventileinheit durch Verbindung der Gehäuse einzelner Module, insbesondere Anflanschen der Module, erfolgen kann. Hierbei können beliebige vorgenannte Komponenten und beliebige Anzahlen derselben in die Zugfahrzeug-Ventileinheit integriert sein.

Eine weitere Ausgestaltung der Erfindung widmet sich der Anpassung der Bremsanlage an unterschiedliche hydraulische Betriebsdrücke unterschiedlicher Typen hydraulischer Bremsanlagen. Hier schlägt die Erfindung für eine Ausgestaltung vor, dass die Steuereinheit mit Steuerlogik ausgestattet ist, die unter Verwendung unterschiedlicher Abhängigkeiten, Kennlinien oder Kennfelder unterschiedliche Steuersignale für unterschiedliche Typen hydraulischer Bremsanlagen, insbesondere mit unterschiedlichen hydraulischen Betriebsdrücken, erzeugt. Hierbei können die Abhängigkeiten, Kennlinien oder Kennfelder bspw. in einer Speichereinheit der Steuereinheit abgelegt sein und die jeweiligen Kriterien für das Vorliegen einer Abrisssituation in Abhängigkeit des jeweiligen hydraulischen Betriebsdrucks für den jeweiligen Typ einer hydraulischen Bremsanlage beschreiben. Mit der Installation der Bremsanlage für einen bestimmten Typ einer hydraulischen Bremsanlage muss dann lediglich eine Auswahl des vorliegenden Typs durch die Steuereinheit, insbesondere durch manuelle Eingabe, erfolgen, womit dann die Steuereinheit die jeweils einschlägige Abhängigkeit, Kennlinie oder das Kennfeld für die Erzeugung des Steuersignals nutzen kann. Damit ist eine einfachere Anpassbarkeit ohne wesentliche konstruktive Änderungen der beteiligten Bauelemente an unterschiedliche Typen hydraulischer Bremsanlagen möglich (wobei durchaus möglich ist, dass je nach Typ der hydraulischen Bremsanlage unterschiedliche Anhängersteuerventile in den Bremsanlagen Einsatz finden).

Eine weitere Lösung der der Erfindung zugrundeliegenden Aufgabe ist gegeben durch eine Gruppe von Bremsanlagen. Diese Gruppe von Bremsanlagen verfügt über eine erste Teilgruppe, die mit Bremsanlagen der zuvor spezifizierten Art gebildet ist. Diese Bremsanlagen der ersten Teilgruppe sind für einen ersten Typ von Zugfahrzeugen oder Traktoren bestimmt, in welchem ein erster hydraulischer Betriebsdruck wirkt. Des Weiteren verfügt die Gruppe von Bremsanlagen über eine zweite Teilgruppe mit Bremsanlagen, die ebenfalls wie zuvor spezifiziert ausgebildet sind. Die Bremsanlagen der zweiten Teilgruppe sind bestimmt für einen zweiten Typ von Zugfahrzeugen oder Traktoren, in denen ein zweiter hydraulischer Betriebsdruck wirkt. Hierbei weicht der zweite hydraulische Betriebsdruck von dem ersten hydraulischen Betriebsdruck ab. Obwohl grundsätzlich in den beiden Teilgruppen Bremsanlagen mit denselben Komponenten oder einer großen Zahl gleicher Komponenten, insbesondere mit gleichen Abrissventilen, Einsatz finden können, kann auf einfache Weise eine Individualisierung der Bremsanlagen für die jeweilige Teilgruppe erfolgen: Erfindungsgemäß weisen die Steuereinheiten der Bremsanlagen beider Teilgruppen Steuerlogik auf, welche das Steuersignal für die Steuerung des Abrissventils in einer Abrisssituation in die zweite Betriebsstellung in Abhängigkeit des der jeweiligen Teilgruppe zugeordneten hydraulischen Betriebsdrucks ermittelt. Hierbei werden die zuvor genannten Abhängigkeiten, Kennlinien oder Kennfelder, die für die jeweilige Teilgruppe spezifisch sind, verwendet.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert eine Bremsanlage eines Zugfahrzeugs (Stand der Technik, vgl. die nicht vorveröffentlichte europäische Patentanmeldung EP 15 177 950.1).
- **Fig. 2**: zeigt einen mittels eines Abrissventils herbeiführbaren Druckverlauf in einer Vorratsleitung bei einem Defekt in einer Bremssteuerleitung (Stand der Technik, vgl. die nicht vorveröffentlichte europäische Patentanmeldung EP 15 177 950.1).
- **Fig. 3**: zeigt stark schematisiert eine erfindungsgemäße Bremsanlage eines Zugfahrzeugs, insbesondere Traktors.
- **Fig. 4**: zeigt schematisiert ein in einer Bremsanlage gemäß Fig. 3 einsetzbares elektropneumatisch vorgesteuertes Abrissventil.
- **Fig. 5**: zeigt schematisiert ein in einer Bremsanlage gemäß Fig. 3 einsetzbares elektropneumatisch vorgesteuertes Abrissventil.
- **Fig. 6**: zeigt schematisch ein in einer Bremsanlage einsetzbares unmittelbar elektronisch über einen Aktuator gesteuertes Abrissventil.

### FIGURENBESCHREIBUNG

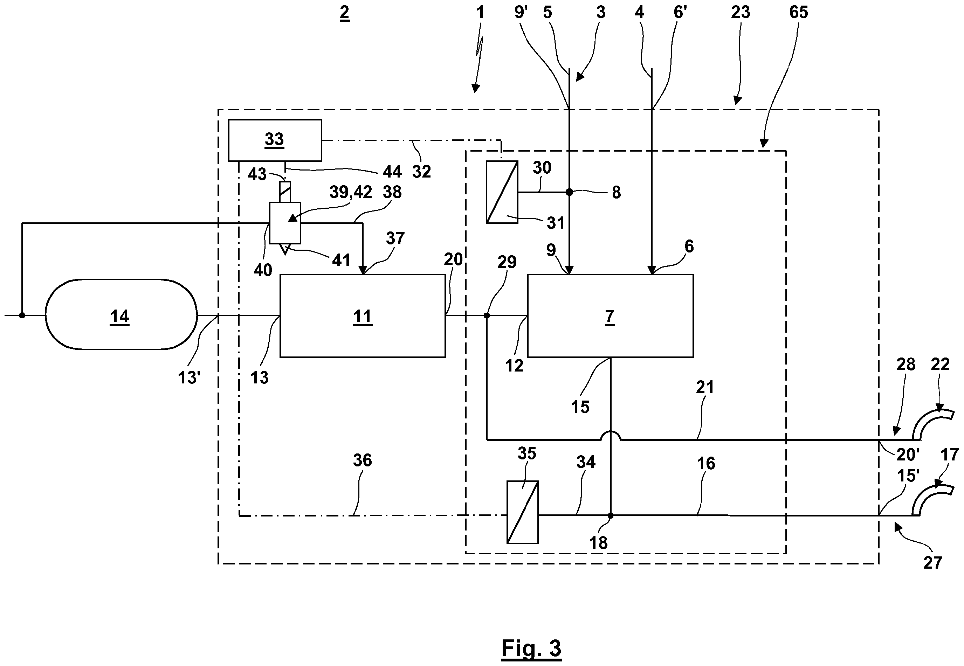

Für die erfindungsgemäße Bremsanlage 2 gemäß **Fig. 3** entspricht grundsätzlich hinsichtlich der Verbindungen zwischen dem Vorratsbehälter 14, den Vorratsanschlüssen 13, 13', dem Abrissventil 11, dem Ausgangsanschluss 20, der Verzweigung 29, dem Anschluss 20, dem Anhängersteuerventil 7, den hydraulischen Steueranschlüssen 6, 9, dem Ausgangsanschluss 15, der Vorratsleitung 21 und der Bremssteuerleitung 16 sowie der Ausgangsanschlüsse 15', 20' und der Kupplungsköpfe 17, 22 den Verbindungen gemäß **Fig. 1**, wobei das Anhängersteuerventil 7 in der erfindungsgemäßen Bremsanlage 1 auch (konstruktiv und mit denselben Anschlüssen) entsprechend dem Anhängersteuerventil 7 gemäß dem Stand der Technik in Fig. 1 ausgebildet sein kann.

Allerdings ist für die erfindungsgemäße Bremsanlage 2 die hydraulische Bremsleitung 5 nicht über die Verzweigung 8 mit dem hydraulischen Steueranschluss 10 des Abrissventils 11 verbunden. Vielmehr ist hier die hydraulische Bremsleitung 5 über die Verzweigung 8 und eine Zweigleitung 30 mit einem Sensor 31, hier einem Drucksensor, verbunden. Das Messsignal des Sensors 31 wird über eine elektrische Leitung 32 einer elektronischen Steuereinheit 33 zugeführt. Entsprechend ist abweichend zu Fig. 1 gemäß Fig. 3 die Verzweigung 18 nicht mit dem pneumatischen Steueranschluss 19 des Abrissventils 11 verbunden. Vielmehr ist die Verzweigung 18 über eine Zweigleitung 34 mit einem Sensor 35, hier einem Drucksensor, verbunden. Das Messsignal des Sensors 35 wird über eine Leitung 36 der elektronischen Steuereinheit 33 zugeführt.

Das Abrissventil 11 verfügt (neben dem Vorratsanschluss 13 und dem Ausgangsanschluss 20) ausschließlich über einen pneumatischen Steueranschluss 37, der über eine Steuerleitung 38 mit einem Steuerventil 39 verbunden ist. Das Steuerventil 39 verfügt über einen Vorratsanschluss 40, welcher aus dem Vorratsbehälter 14 mit Druckluft versorgt wird. Des Weiteren verfügt das Steuerventil 39 über eine Entlüftung 41. Im einfachsten Fall ist das Steuerventil 39 als 3/2-Wegeventil ausgebildet mit einer Belüftungsstellung, in welcher über das Steuerventil 39 in einer Durchlassstellung desselben der Steueranschluss 37 des Abrissventils 11 mit Druckluft aus dem Vorratsbehälter 14 beaufschlagt wird, sowie mit einer Entlüftungsstellung, in welcher der Steueranschluss 37 des Abrissventils 11 über das Steuerventil 39 mit der Entlüftung 41 verbunden wird. Das Steuerventil 39 bildet somit ein elektropneumatisches Vorsteuerventil 42 für das Abrissventil 11.

Das Steuerventil 39 verfügt über einen elektrischen Steueranschluss 43, der über eine Steuerleitung 44 mit der elektronischen Steuereinheit 33 verbunden ist. In einer Abrisssituation, welche von der Steuereinheit 33 auf Grundlage der Signale der Sensoren 31, 35 ermittelt wird, erzeugt die Steuereinheit 33 ein Steuersignal, welches über die Steuerleitung 44 das Steuerventil 39 so ansteuert, dass infolge der elektropneumatischen Vorsteuerung durch das Steuerventil 39 das Abrissventil 11 in die zweite Betriebsstellung überführt wird, in welcher die größere Drosselwirkung wirksam wird und somit entsprechend **Fig. 2** ein Druckabfall an dem Kupplungskopf Vorrat 22 herbeigeführt wird, der letztendlich zu einer Auslösung der Notbremsfunktion des Anhängers führt.

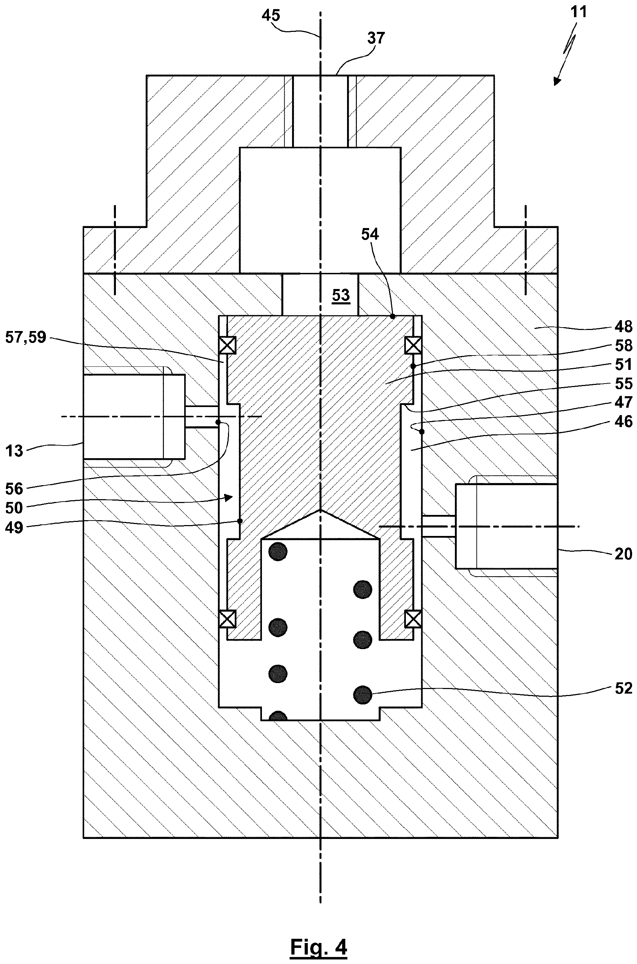

**Fig. 4** zeigt schematisch ein Abrissventil 11, welches als Schieberventil ausgebildet ist. In der in Fig. 4 wirksamen ersten Betriebsstellung des Abrissventils 11 münden die in Richtung einer Längsachse 45 versetzt angeordneten Anschlüsse 13, 20 in einen Ringraum 46, welcher radial außenliegend von einer Innenbohrung 47 eines Gehäuses 48 begrenzt ist sowie radial innenliegend von einem Nutgrund 49 einer in Umfangsrichtung um die Längsachse 45 umlaufenden Nut 50 eines Ventilkörpers 51 begrenzt ist. Der Ringraum 46 gewährleistet eine Verbindung der Anschlüsse 13, 20 mit kleiner oder keiner Drosselwirkung angesichts des verhältnismäßig großen Querschnitts des Ringraums 46. Der Ventilkörper wird durch eine Feder 52 in Richtung der in Fig. 4 wirksamen ersten Betriebsstellung beaufschlagt.

Entgegen der Beaufschlagung durch die Feder 52 kann durch Beaufschlagung des Steueranschlusses 37 mit dem Druck des Vorratsbehälters 14 über das Steuerventil 39 in seiner Durchlassstellung der Ventilkörper 51 in Richtung der Längsachse 45 in seine zweite Betriebsstellung (in Fig. 4 nach unten) bewegt werden. Hierzu mündet der Anschluss 37 in einen Steuerraum 53. Der Steuerraum ist begrenzt von einer Steuerfläche 54 des Ventilkörpers 51, die von der Stirnseite des Ventilkörpers 51 ausgebildet ist, die auf der der Feder 52 abgewandten Seite angeordnet ist. Hierbei ist die Größe der Steuerfläche 54 derart bemessen, dass mit dem Druck des Vorratsbehälters 14 an der Steuerfläche 54 eine Kraft erzeugt wird, die ausreichend ist, um den Ventilkörper 51 entgegen der Beaufschlagung durch die Feder 52 in die zweite Betriebsstellung zu bewegen.

Mit der Überführung des Ventilkörpers 51 von der ersten Betriebsstellung in die zweite Betriebsstellung überfährt eine den Ringraum 46 axial begrenzende, auf der dem Steuerraum 53 zugewandten Seite des Ringraums 46 angeordnete Steuerkante 55 eine Mündung 56 des Vorratsanschlusses 13 in die Innenbohrung 47. Dies hat zur Folge, dass die Druckluft nicht ausschließlich über den Ringraum 46 mit verhältnismäßig großem Querschnitt von dem Vorratsanschluss 13 zu dem Ausgangsanschluss 20 gelangt. Vielmehr muss die Druckluft auf diesem Weg einen Ringraum 57 passieren, der radial außenliegend von der Innenbohrung 47 begrenzt ist und radial innenliegend begrenzt ist von einer Mantelfläche 58 des Ventilkörpers 51, deren Durchmesser größer ist als der Durchmesser des Nutgrunds 49. Der Ringraum 57 verfügt somit über einen kleineren Querschnitt als der Ringraum 46, womit in der zweiten Betriebsstellung ein kleinerer Drosselquerschnitt 59 mit größerer Drosselwirkung von der Druckluft auf dem Weg zwischen den Anschlüssen 13, 20 passiert werden muss.

Ohne Erkennen einer Abrisssituation durch die Steuereinheit 33 befindet sich das Steuerventil 39 in seiner Entlüftungsstellung, womit das Abrissventil 11 die in Fig. 4 dargestellte erste Betriebsstellung einnimmt. Erkennt hingegen die Steuereinheit 33 das Vorliegen einer Abrisssituation, steuert diese mit einem Steuersignal das Steuerventil 39 um in die Belüftungsstellung, so dass die Druckluft aus dem Vorratsbehälter 14 über das Steuerventil 39 und den Steueranschluss 37 zu dem Steuerraum 53 gelangt und infolge der auf die Steuerfläche 54 des Ventilkörpers 51 ausgeübten Kraft entgegen der Beaufschlagung durch die Feder 52 die zweite Betriebsstellung herbeigeführt wird. Für das Ausführungsbeispiel gemäß Fig. 4 werden somit die unterschiedlichen Drosselquerschnitte in der ersten und zweiten Betriebsstellung des Abrissventils 11 durch zwischen den Anschlüssen 13, 20 zur Wirkung kommende Ringräume 46, 57 mit unterschiedlichen Drosselquerschnitten bereitgestellt.

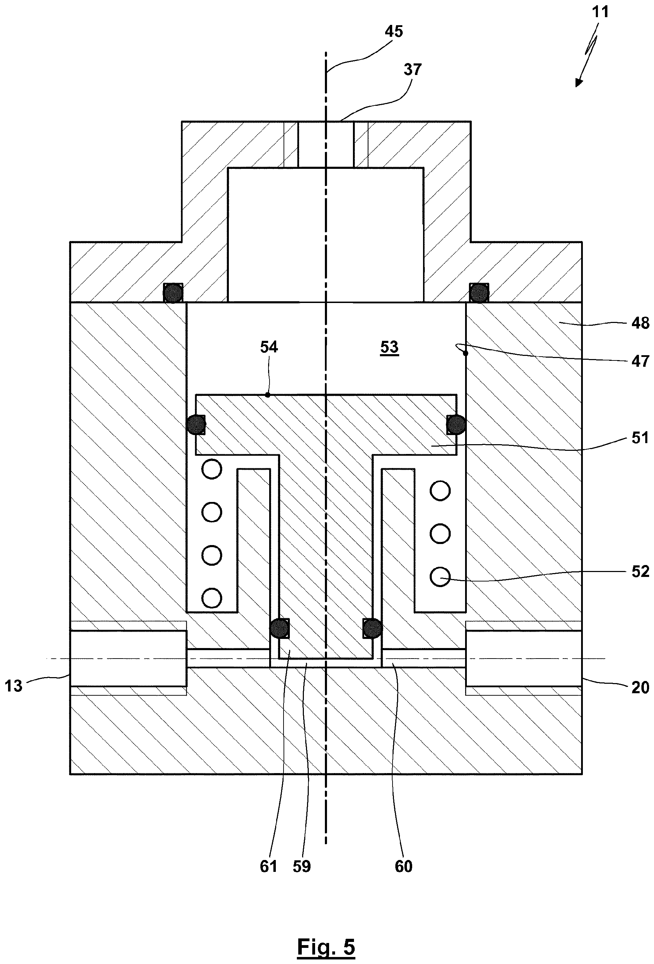

Auch für das Ausführungsbeispiel gemäß **Fig. 5** bildet ein in Richtung der Längsachse 45 in einer Innenbohrung 47 eines Gehäuses 48 verschieblicher, auf einer vorgespannten Druckfeder 52 abgestützter Ventilkörper 51 eine Steuerfläche 54 aus, mit der ein Steuerraum 53 begrenzt ist, der über den Steueranschluss 37 mit dem Steuerventil 39 verbunden ist. Hier ist mit dem Ventilkörper 51 allerdings kein Schieberventil gebildet. Vielmehr sind hier die Anschlüsse 13, 20, die in derselben Höhe bzgl. der Längsachse 45 auf unterschiedlichen Seiten angeordnet sind, über einen Verbindungskanal oder eine Verbindungsbohrung 60 miteinander verbunden. In der (in Fig. 5 nicht wirksamen) ersten Betriebsstellung ohne Druckbeaufschlagung des Steuerraums 53 gibt der Ventilkörper 51 die Verbindungsbohrung 60 vollständig frei, so dass ein maximaler Drosselquerschnitt zur Verfügung steht.

Hingegen kann mit Druckbeaufschlagung des Steuerraums 53 die in Fig. 5 wirksame zweite Betriebsstellung herbeigeführt werden. In der zweiten Betriebsstellung ist ein von einem Endbereich des Ventilkörpers 51 ausgebildeter Drosselkörper 61 in der Verbindungsbohrung 60 angeordnet, womit hier ein reduzierter Drosselquerschnitt 59 wirksam wird.

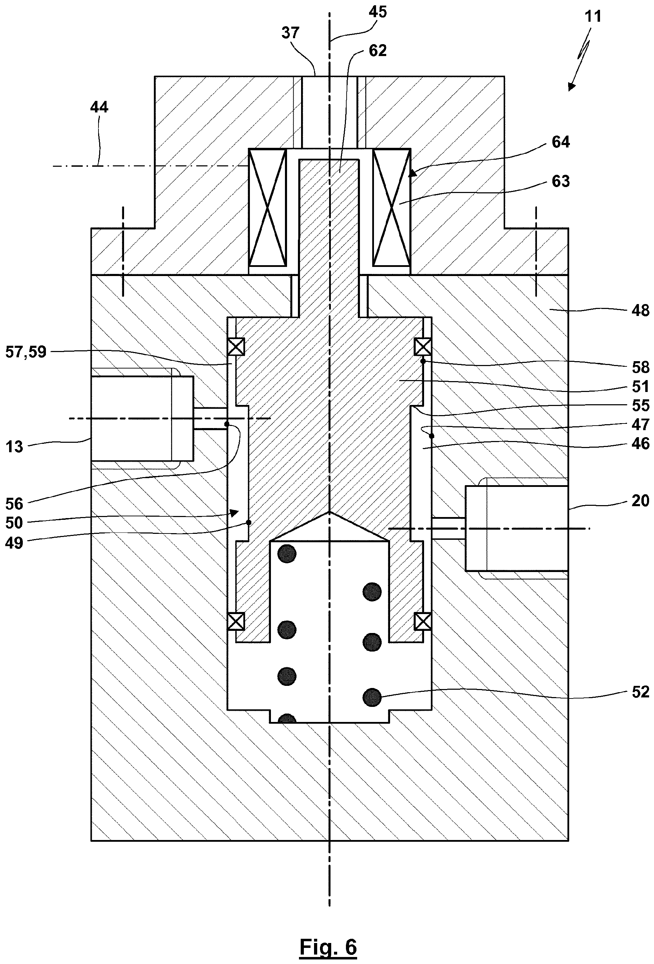

**Fig. 6** zeigt eine Ausführungsform des Abrissventils 11, welche grundsätzlich entsprechend dem Abrissventil gemäß Fig. 4 in Schieberbauart ausgebildet ist. Hier erfolgt aber die Umschaltung des Abrissventils 11 nicht durch pneumatische Vorsteuerung mit Druckbeaufschlagung des Steuerraums 53 infolge einer Umschaltung des Steuerventils 39. Vielmehr verfügt hier der Ventilkörper 51 über einen Anker 62, auf den mit geeigneter Bestromung einer Spule 63 eine Magnetkraft aufgebracht wird, die anstelle der pneumatischen Kraft gemäß Fig. 4 entgegen der Beaufschlagung durch die Feder 52 eine Umschaltung in die zweite Betriebsstellung herbeiführt. In diesem Fall ist die Spule 63 unmittelbar über die Steuerleitung 44 mit der elektronischen Steuereinheit 33 verbunden, über welche dann ein Steuersignal zur geeigneten elektrischen Beaufschlagung der Spule 63 erzeugt wird. Mit der Spule 63 und dem Anker 62 ist ein Aktuator 64 gebildet.

Gemäß Fig. 3 können die Steuereinheit 33, das Steuerventil 39, das Abrissventil 11, der Drucksensor 31, der Drucksensor 35 und das Anhängersteuerventil 7 mit zugeordneten elektrischen und pneumatischen sowie hydraulischen Leitungen und Anschlüssen in eine Zugfahrzeug-Ventileinheit 23 (vgl. gestrichelte Umrandung) integriert sein. Möglich ist hierbei auch, dass ein Zugfahrzeug-Ventilmodul mit den Sensoren 31, 35 und dem Anhängersteuerventil 7 gebildet ist (vgl. die gestrichelte Umrandung), wobei das Zugfahrzeug-Ventilmodul über Anschlüsse für die beiden hydraulischen Bremsleitungen 4, 5, Anschlüsse für die Kupplungsköpfe 17, 22 und einen Anschluss, der mit dem Ausgangsanschluss 20 des Abrissventils 11 verbunden ist, verfügen kann. Darüber hinaus verfügt dann das Zugfahrzeug-Ventilmodul über elektrische Anschlüsse für die Leitungen 32, 36.

### BEZUGSZEICHENLISTE

- 1: Bremsanlage
- 2: Zugfahrzeug
- 3: hydraulische Bremsanlage
- 4: hydraulische Bremsleitung
- 5: hydraulische Bremsleitung
- 6: hydraulischer Steueranschluss
- 7: Anhängersteuerventil
- 8: Verzweigung
- 9: hydraulischer Steueranschluss
- 10: hydraulischer Steueranschluss
- 11: Abrissventil
- 12: Anschluss
- 13: Vorratsanschluss
- 14: Vorratsbehälter
- 15: Ausgangsanschluss
- 16: Bremssteuerleitung
- 17: Kupplungskopf Bremse
- 18: Verzweigung
- 19: pneumatischer Steueranschluss
- 20: Ausgangsanschluss
- 21: Vorratsleitung
- 22: Kupplungskopf Vorrat
- 23: Zugfahrzeug-Ventileinheit
- 24: Verlauf
- 25: Druck
- 26: Zeit
- 27: Bremsleitungsteil
- 28: Vorratsleitungsteil
- 29: Verzweigung
- 30: Zweigleitung
- 31: Drucksensor
- 32: Leitung
- 33: elektronische Steuereinheit
- 34: Zweigleitung
- 35: Drucksensor
- 36: Leitung
- 37: Steueranschluss
- 38: Steuerleitung
- 39: Steuerventil
- 40: Vorratsanschluss
- 41: Entlüftung
- 42: elektropneumatisches Vorsteuerventil
- 43: Steueranschluss
- 44: Steuerleitung
- 45: Längsachse
- 46: Ringraum
- 47: Innenbohrung
- 48: Gehäuse
- 49: Nutgrund
- 50: Nut
- 51: Ventilkörper
- 52: Feder
- 53: Steuerraum
- 54: Steuerfläche
- 55: Steuerkante
- 56: Mündung
- 57: Ringraum
- 58: Mantelfläche
- 59: Drosselquerschnitt
- 60: Verbindungsbohrung
- 61: Drosselkörper
- 62: Anker
- 63: Spule
- 64: Aktuator
- 65: Zugfahrzeug-Ventilmodul
- 66: Zeitpunkt
- 67: Zeitpunkt

## Patentansprüche

1. Bremsanlage (1) für ein Zugfahrzeug, insbesondere ein Traktor, mit
a) einem Anhängersteuerventil (7), welches in Abhängigkeit eines hydraulischen Bremsdrucks einen pneumatischen Bremssteuerdruck für einen Anhänger erzeugt, und
b) einem zwischen einem Kupplungskopf Vorrat (22) und einer Druckluftquelle angeordneten Abrissventil (11), welches eine erste Betriebsstellung und eine zweite Betriebsstellung aufweist, wobei ein Drosselquerschnitt (59) des Abrissventils (11) in der zweiten Betriebsstellung kleiner ist als in der ersten Betriebsstellung,
c) wobei eine Steuereinheit (33) vorhanden ist, welche mit Steuerlogik ausgestattet ist, die ein elektrisches Steuersignal erzeugt, welches das Abrissventil (11) in einer Abrisssituation in die zweite Betriebsstellung steuert
**dadurch gekennzeichnet, dass**
d) ein Sensor (31) vorhanden ist, welcher den Druck in einer hydraulischen Bremsleitung (5) erfasst, und ein Sensor (35) vorhanden ist, welcher den Druck in einer pneumatischen Bremssteuerleitung (16) erfasst, und
e) die Steuereinheit (33) mit Steuerlogik ausgestattet ist, die
ea) auf Grundlage eines Vergleichs oder Verhältnisses
- des Signals des Sensors (31), welcher den Druck in der hydraulischen Bremsleitung (5) erfasst,
- mit oder zu dem Signal des Sensors (35), welcher den Druck in der pneumatischen Bremssteuerleitung (16) erfasst,
eine Abrisssituation erkennt, oder
eb) für das Erkennen einer Abrisssituation
- eine Änderungsgeschwindigkeit des Signal des Sensors (35), welcher den Druck in der pneumatischen Bremssteuerleitung (16) erfasst, auswertet und/oder
- eine Zeitdauer, für welche das Verhältnis des Signals des Sensors (31), welcher den Druck in der hydraulischen Bremsleitung (5) erfasst, zu dem Signal des Sensors (35), welcher den Druck in der pneumatischen Bremssteuerleitung (16) erfasst, einen Schwellwert unter- oder überschreitet, auswertet.

2. Bremsanlage (1) nach Anspruch 1, **dadurch gekennzeichnet, dass** das elektrische Steuersignal einem elektropneumatischen Vorsteuerventil (42) zugeführt wird, welches einen Vorsteuerdruck für das Abrissventil (11) erzeugt, der das Abrissventil (11) in einer Abrisssituation in die zweite Betriebsstellung steuert.

3. Bremsanlage (1) nach Anspruch 1, **dadurch gekennzeichnet, dass** das elektrische Steuersignal einem elektromagnetischen Aktuator (64) zugeführt wird, der in einer Abrisssituation einen Ventilkörper (51) des Abrissventils (11) bewegt, womit das Abrissventil (11) in die zweite Betriebsstellung gesteuert wird.

4. Bremsanlage (1) nach Anspruch 1, **dadurch gekennzeichnet, dass** die Steuereinheit (33) mit Steuerlogik ausgestattet ist, die für das Erkennen einer Abrisssituation das Ergebnis des Vergleichs oder des Verhältnisses des Signals des Sensors (31), welcher den Druck in der hydraulischen Bremsleitung (5) erfasst, mit oder zu dem Signal des Sensors (35), welcher den Druck in der pneumatischen Bremssteuerleitung (16) erfasst, mit einem Schwellwert vergleicht.

5. Bremsanlage (1) nach einem der vorhergehenden Ansprüche, **dadurch gekennzeichnet, dass** das Anhängersteuerventil (7), das Abrissventil (11), mindestens eine Sensor (31; 35) und/oder die Steuereinheit (33) in eine Zugfahrzeug-Ventileinheit (23) integriert sind.

6. Bremsanlage nach einem der vorhergehenden Ansprüche, **dadurch gekennzeichnet, dass** die Steuereinheit (33) mit Steuerlogik ausgestattet ist, die unter Verwendung unterschiedlicher Abhängigkeiten, Kennlinien oder Kennfelder für unterschiedliche Typen hydraulischer Bremsanlagen (1) unterschiedliche Steuersignale erzeugt.

7. Gruppe von Bremsanlagen (1) mit
a) einer ersten Teilgruppe mit Bremsanlagen (1) nach einem der vorhergehenden Ansprüche, die für einen ersten Typ von Zugfahrzeugen oder Traktoren mit einem ersten hydraulischen Betriebsdruck bestimmt sind, und
b) einer zweiten Teilgruppe mit Bremsanlagen (1) nach einem der vorhergehenden Ansprüche, die für einen zweiten Typ von Zugfahrzeugen oder Traktoren mit einem zweiten hydraulischen Betriebsdruck, der von dem ersten hydraulischen Betriebsdruck abweicht, bestimmt sind,
c) wobei in den Bremsanlagen (1) der beiden Teilgruppen dieselben Abrissventile (11) vorhanden sind und
d) Steuereinheiten (33) der Bremsanlagen (1) der beiden Teilgruppen Steuerlogik aufweisen, welche das Steuersignal, welches das Abrissventil (11) in einer Abrisssituation in die zweite Betriebsstellung steuert, in Abhängigkeit des der jeweiligen Teilgruppe zugeordneten hydraulischen Betriebsdrucks ermittelt, wobei für die Steuerlogik für die jeweilige Teilgruppe spezifische Abhängigkeiten, Kennlinien oder Kennfelder verwendet werden.

## Claims

1. Brake system (1) for a pulling vehicle, in particular a tractor, with
a) a trailer control valve (7) which generates a pneumatic brake control pressure for a trailer in dependence on a hydraulic brake pressure and
b) an emergency valve (11) arranged between a supply coupling head (22) and a pressurised air source, the emergency valve comprising a first operating position and a second operating position and a throttling cross section (59) of the emergency valve (11) being smaller in the second operating positon than in the first operating position,
c) a control unit (33) being provided comprising control logic which generates an electric control signal which controls the emergency valve (11) in an emergency situation into the second operating position,
**characterised in that**
d) a sensor (31) is provided which senses the pressure in a hydraulic brake line (5) and a sensor (35) is provided which senses the pressure in a pneumatic brake control line (16) and
e) the control unit (33) comprises control logic which
ea) detects an emergency situation on the basis of a comparison or the relation of
- the signal of the sensor (31) which senses the pressure in the hydraulic brake line (5),
- and the signal of the sensor (35) which senses the pressure in the pneumatic brake control line (16)
or
eb) for the detection of an emergency situation
- analyses a change velocity of the signal of the sensor (35) which senses the pressure in the pneumatic brake control line (16) and/or
- analyses a time duration for which the relation of the signal of the sensor (31) which senses the pressure in the hydraulic brake line (5) and the signal of the sensor (35) which senses the pressure in the pneumatic brake control line (16) falls below or exceeds a threshold.

2. Brake system (1) of claim 1, **characterised in that** the electric control signal is supplied to an electro-pneumatic pilot valve (42) which generates a pilot pressure for the emergency valve (11) which controls the emergency valve (11) into the second operating position in an emergency situation.

3. Brake system (1) of claim 1, **characterised in that** the electric control signal is supplied to an electro-magnetic actuator (64) which moves a valve body (51) of the emergency valve (11) in an emergency situation so that the emergency valve (11) is controlled into the second operating position.

4. Brake system (1) of claim 1, **characterised in that** the control unit (33) comprises control logic which when detecting an emergency situation compares the result of the comparison or of the relation of the signal of the sensor (31) which senses the pressure in the hydraulic brake line (5) and the signal of the sensor (35) which senses the pressure in the pneumatic brake control line (16) to a threshold.

5. Brake system (1) of one of the preceding claims, **characterised in that** the trailer control valve (7), the emergency valve (11), at least one sensor (31; 35) and/or the control unit (33) is/are integrated into a tractor valve (23).

6. Brake system of one of the preceding claims, **characterised in that** the control unit (33) comprises control logic which generates different control signals under use of different dependencies, characteristic curves or characteristic maps for different types of hydraulic brake systems (1).

7. Group of brake systems (1) with
a) a first group part with brake systems (1) according to one of the preceding claims which are designated for a first type of pulling vehicles or tractors having a first hydraulic operating pressure and
b) a second group part with brake systems (1) according to one of the preceding claims which are designated for a second type of pulling vehicles or tractors having a second hydraulic operating pressure which differs from the first hydraulic operating pressure,
c) the brake systems (1) of the two group parts having the same emergency valves (11) and
d) control units (33) of the brake systems (1) of the two group parts comprising control logic which determines the control signal which controls the emergency valve (11) in an emergency situation into the second operating position in dependence on the hydraulic operating pressure associated to the respective group part, for the control logic for the respective group part specific dependencies, characteristic curves or characteristic maps being used.

## Revendications

1. Installation de freinage (1) pour un véhicule de traction, plus particulièrement d'un tracteur, avec
a) une soupape de commande de remorque (7), qui génère, en fonction d'une pression de freinage hydraulique, une pression de commande de freinage pneumatique pour une remorque et
b) une soupape de rupture (11) disposée entre une réserve de tête de couplage (22) et une source d'air comprimé, qui présente une première position de fonctionnement et une deuxième position de fonctionnement, une section transversale d'étranglement (59) de la soupape de rupture (11) étant, dans la deuxième position de fonctionnement, plus petite que dans la première position de fonctionnement,
c) une unité de commande (33) étant prévue, qui est équipée d'une logique de commande, qui génère un signal de commande électrique, qui commande la soupape de rupture (11) dans une situation de rupture vers la deuxième position de fonctionnement,
**caractérisée en ce que**
d) un capteur (31) est prévu, qui mesure la pression dans une conduite de freinage hydraulique (5) et un capteur (35) est prévu, qui mesure la pression dans une conduite de commande de freinage pneumatique (16) et
e) l'unité de commande (33) est équipée d'une logique de commande qui
ea) sur la base d'une comparaison ou d'un rapport
- du signal du capteur (31), qui mesure la pression dans la conduite de freinage hydraulique (5),
- avec le signal du capteur (35), qui mesure la pression dans la conduite de commande de freinage pneumatique (16),
détecte une situation de rupture ou
eb) pour la détection d'une situation de rupture
- analyse une vitesse de variation du signal du capteur (35), qui mesure la pression dans la conduite de commande de freinage pneumatique (16) et/ou
- analyse une durée pendant laquelle le rapport entre le signal du capteur (31), qui mesure la pression dans la conduite de freinage hydraulique (5), et le signal du capteur (35), qui mesure la pression dans la conduite de commande de freinage pneumatique (16), passe en dessous ou dépasse une valeur de seuil.

2. Installation de freinage (1) selon la revendication 1, **caractérisée en ce que** le signal de commande électrique est introduit dans une soupape de pré-commande électropneumatique (42) qui génère une pression de pré-commande pour la soupape de rupture (11), qui commande la soupape de rupture (11) dans une situation de rupture vers la deuxième position de fonctionnement.

3. Installation de freinage (1) selon la revendication 1, **caractérisée en ce que** le signal de commande électrique est introduit dans un actionneur électromagnétique (64) dans, dans une situation de rupture, déplace un corps de soupape (51) de la soupape de rupture (11), ce qui permet de commander la soupape de rupture (11) vers la deuxième position de fonctionnement.

4. Installation de freinage (1) selon la revendication 1, **caractérisée en ce que** l'unité de commande (33) est équipée d'une logique de commande, qui, pour la détection d'une situation de rupture, compare le résultat de la comparaison ou du rapport entre le signal du capteur (31), qui mesure la pression dans la conduite de freinage hydraulique (5) avec le signal du capteur (35), qui mesure la pression dans la conduite de commande de freinage pneumatique (16), avec une valeur de seuil.

5. Installation de freinage (1) selon l'une des revendications précédentes, **caractérisée en ce que** la soupape de commande de remorque (7), la soupape de rupture (11), au moins un capteur (31 ; 35) et/ou l'unité de commande (33) sont intégrés dans une unité à soupapes du véhicule de traction (23).

6. Installation de freinage (1) selon l'une des revendications précédentes, **caractérisée en ce que** l'unité de commande (33) est équipée d'une logique de commande qui génère, à l'aide de différentes fonctions, courbes caractéristiques ou diagrammes caractéristiques, des signaux de commande différents pour différents types d'installations de freinage hydrauliques (1).

7. Groupe d'installations de freinage (1) avec
a) un premier groupe partiel d'installations de freinage (1) selon l'une des revendications précédentes, qui sont déterminées pour un premier type de véhicules de traction ou de tracteurs avec une première pression hydraulique de service et
b) un deuxième groupe partiel d'installations de freinage (1) selon l'une des revendications précédentes, qui sont déterminée pour un deuxième type de véhicules de traction ou de tracteurs avec une deuxième pression hydraulique de service, qui est différente de la première pression hydraulique de service,
c) les mêmes soupapes de rupture (11) étant présentes dans les installations de freinage (1) des deux groupes partiels et
d) les unités de commande (33) des installations de freinage (1) des deux groupes partiels comprennent une logique de commande qui détermine le signal de commande, qui commande la soupape de rupture (11) dans une situation de rupture vers la deuxième position de fonctionnement, en fonction de la pression hydraulique de service correspondant au groupe partiel concerné, des fonctions, courbes caractéristiques ou diagrammes caractéristiques du groupe partiel concerné étant utilisés pour la logique de commande.
